# EUROPEAN PATENT APPLICATION

(11) **EP 4 145 901 A1**
(43) Date of publication of application: **08.03.2023**
(21) Application number: 21808449.9
(22) Date of filing: 13.05.2021
(51) Int. Cl.: H04W 28/24

(54) **COMMUNICATION METHOD AND APPARATUS**

(30) Priority: 22.05.2020 CN 202010441955
(71) Applicant: Huawei Technologies Co., Ltd., Shenzhen, Guangdong 518129 (CN)
(72) Inventor: PENG, Wenjie, Shenzhen, Guangdong 518129 (CN); QIU, Liwei, Shenzhen, Guangdong 518129 (CN); WEI, Dongdong, Shenzhen, Guangdong 518129 (CN)
(74) Representative: Gill Jennings & Every LLP
(86) International application number: PCT/CN2021/093577
(87) International publication number: WO 2021/233195

(57) **Abstract**

A communication method and apparatus are provided. The method includes: A first network element sends, to a second network element, N groups of QoS profiles corresponding to a first QoS flow, and then receives first indication information from the second network element, where the first indication information indicates a group of QoS profiles selected by the second network element for the first QoS flow, and the group of QoS profiles selected for the first QoS flow is one of the N groups of QoS profiles; and the first network element sends second indication information to a third network element, where the second indication information indicates the group of QoS profiles selected for the first QoS flow. The first QoS flow may be specifically carried on the second network element. According to the foregoing technical solution, the second network element can also participate in selection of QoS profiles, to ensure that a QoS parameter of the first QoS flow matches QoS that can be satisfied by a secondary network device. This effectively guarantees quality of service of a service, and improves service experience of users.

## Description

### CROSS-REFERENCE TO RELATED APPLICATIONS

This application claims priority to Chinese Patent Application No. 202010441955.6, filed with the China National Intellectual Property Administration on May 22, 2020 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

In a dual connectivity (dual connectivity, DC) mode, a terminal device keeps connected to both a master network device and a secondary network device, and the master network device may determine to establish a quality of service (Quality of Service, QoS) flow of the terminal device on the secondary network device. In a conventional technology, a master network device may select a group of QoS parameters for a QoS flow based on implementation of the master network device and indicate the group of QoS parameters to a secondary network device. However, because the master network device may not know an air interface link status of the secondary network device or a board capability of the secondary network device, the QoS parameters selected by the master network device may be inconsistent with QoS that can be actually guaranteed by the secondary network device. Consequently, QoS of a user service cannot be guaranteed, and service experience is affected.

### SUMMARY

Embodiments of this application provide a communication method and apparatus, to select, for a QoS flow when there are two nodes on an access side, a QoS parameter that can guarantee quality of service of the QoS flow, thereby improving service experience of users.

According to a first aspect, an embodiment of this application provides a communication method. The method may be performed by a first network element, or may be performed by a component (for example, a chip or a circuit) disposed in the first network element. The method includes: The first network element sends, to a second network element, N groups of QoS profiles corresponding to a first QoS flow, where N is an integer greater than or equal to 1; the first network element receives first indication information from the second network element, where the first indication information indicates a group of QoS profiles selected by the second network element for the first QoS flow, and the group of QoS profiles selected for the first QoS flow is one of the N groups of QoS profiles; and the first network element sends second indication information to a third network element, where the second indication information indicates the group of QoS profiles selected for the first QoS flow.

According to this technical solution, the first network element sends, to the second network element, the N groups of QoS profiles corresponding to the first QoS flow, so that the second network element can participate in selection of QoS profiles, to ensure that a QoS parameter of the first QoS flow matches QoS that can be satisfied by a secondary network device. This effectively guarantees quality of service of a service and improves service experience of users.

In a possible design of the first aspect, the first network element may be a master network device accessed by a terminal device, the second network element may be a secondary network device accessed by the terminal device, and the third network element may be a core network device. Alternatively, the first network element may be a central unit (central unit, CU) in a secondary network device accessed by a terminal device, the second network element may be a distributed unit (distributed unit, DU) in the secondary network device accessed by the terminal device, and the third network element may be a master network device accessed by the terminal device. Alternatively, the first network element may be a CU of a network device accessed by a terminal device, the second network element may be a DU of the network device accessed by the terminal device, and the third network element may be a core network device.

In this embodiment of this application, two nodes on an access side may be the master network device and the secondary network device that are accessed by the terminal device, or may be the CU and the DU of the network device accessed by the terminal device. In the first scenario, if the master network device determines to offload the first QoS flow to the secondary network device for transmission, the master network device may send a plurality of groups of QoS profiles corresponding to the first QoS flow to the secondary network device, and the secondary network device selects the applied QoS profiles for the first QoS flow from the plurality of groups of QoS profiles, and then indicates the selected group of QoS profiles to the master network device. In this way, the secondary network device can participate in selection of QoS profiles, to ensure that the QoS parameter of the first QoS flow offloaded to the secondary network device matches QoS that can be satisfied by the secondary network device. This effectively guarantees quality of service of a service and improves service experience of users.

In the second scenario, because a QoS flow of a service is usually carried on the DU, the CU sends, to the DU, a plurality of groups of QoS profiles corresponding to the QoS flow, and the DU selects a group of appropriate QoS profiles from the plurality of groups of QoS profiles, and feeds back the group of appropriate QoS profiles to the CU. In this way, finally selected QoS profiles can match quality of service that can be guaranteed by the DU. This effectively guarantees quality of service of a service and improves service experience of users.

In a possible design of the first aspect, the method further includes: The first network element receives, from the third network element, M groups of QoS profiles corresponding to the first QoS flow, and determines the N groups of QoS profiles based on the M groups of QoS profiles, where M is an integer greater than or equal to N.

In a possible design of the first aspect, the method further includes: The first network element receives assistance information from the second network element, where the assistance information indicates quality of service QoS that can be satisfied by the second network element. In this way, that the first network element determines the N groups of QoS profiles based on the M groups of QoS profiles may be: determining the N groups of QoS profiles from the M groups of QoS profiles based on the assistance information.

In a possible design of the first aspect, the method further includes: The first network element may further modify a value of one or more QoS parameters in one or more of the N groups of QoS profiles.

In this embodiment of this application, the first network element may perform screening on the M groups of QoS profiles that correspond to the first QoS flow and that are received from the third network element, and send, to the second network element, a part or all groups of QoS profiles that meet a condition. The screening may refer to changing a quantity of QoS profiles or changing one or more QoS parameters in one or more groups of QoS profiles. Therefore, a processing effect of the second network element can be effectively improved.

In a possible design of the first aspect, each group of QoS profiles may include a value of one or more of the following QoS parameters: an uplink maximum flow bit rate (maximum flow bit rate, MFBR), a downlink MFBR, an uplink guaranteed flow bit rate (guaranteed flow bit rate, GFBR), a downlink GFBR, an uplink maximum packet loss rate (maximum packet loss rate, MPLR), a downlink MPLR, a packet delay budget (packet delay budget, PDB), a packet error rate (packet error rate, PER), a 5th generation QoS identifier (5G QoS identifier, 5QI), a maximum data burst volume (maximum data burst volume, MDBV), and a QoS flow priority.

According to a second aspect, an embodiment of this application provides a communication method. The method may be performed by a second network element, or may be performed by a component (for example, a chip or a circuit) disposed in the second network element. The method includes: The second network element receives, from a first network element, N groups of QoS profiles corresponding to a first QoS flow, where N is an integer greater than or equal to 1; the second network element selects one group of QoS profiles for the first QoS flow from the N groups of QoS profiles; and the second network element sends first indication information to the first network element, where the first indication information indicates the group of QoS profiles selected by the second network element for the first QoS flow.

In a possible design of the second aspect, the first network element may be a master network device accessed by a terminal device, the second network element may be a secondary network device accessed by the terminal device, and the third network element may be a core network device. Alternatively, the first network element may be a central unit CU of a secondary network device accessed by a terminal device, the second network element may be a distributed unit DU of the secondary network device accessed by the terminal device, and the third network element may be a master network device accessed by the terminal device. Alternatively, the first network element may be a CU of a network device accessed by a terminal device, the second network element may be a DU of the network device accessed by the terminal device, and the third network element may be a core network device.

In a possible design of the second aspect, the method further includes: The second network element sends assistance information to the first network element, where the assistance information indicates quality of service QoS that can be satisfied by the second network element.

In a possible design of the second aspect, each group of QoS profiles may include a value of one or more of the following QoS parameters: an uplink maximum flow bit rate MFBR, a downlink MFBR, an uplink guaranteed flow bit rate GFBR, a downlink GFBR, an uplink maximum packet loss rate MPLR, a downlink MPLR, a packet delay budget PDB, a packet error rate PER, a 5th generation QoS identifier 5QI, a maximum data burst volume MDBV, and a QoS flow priority.

For beneficial effects in various possible designs of the second aspect, refer to corresponding descriptions in the first aspect. Details are not described herein again.

According to a third aspect, an embodiment of this application provides another communication method. The method may be performed by a master network device, or may be performed by a component (for example, a chip or a circuit) disposed in the master network device. The method includes: The master network device sends first indication information to a secondary network device, where the first indication information indicates the secondary network device to enable a high-speed mode of a terminal device; and the master network device receives, from the secondary network device, a high-speed configuration generated by the secondary network device for the terminal device.

According to the technical solution, the master network device and the secondary network device can keep synchronization in the high-speed mode, thereby effectively enhancing stability and reliability of service transmission and improving user experience.

In a possible design of the third aspect, the first indication information is included in a secondary node addition request message, and the high-speed configuration is included in a secondary node addition request acknowledgment message; or the first indication information is included in a secondary node modification request message, and the high-speed configuration is included in a secondary node modification request acknowledgment message.

In this embodiment of this application, the master network device may perform synchronization in the high-speed mode in a process of configuring dual connectivity for the terminal device or changing dual connectivity, thereby effectively improving flexibility of the method.

In a possible design of the third aspect, the method further includes: The master network device sends an RRC reconfiguration message to the terminal device, where the RRC reconfiguration message includes the high-speed configuration; and the master network device receives an RRC reconfiguration complete message from the terminal device, and sends the RRC reconfiguration complete message to the secondary network device, where the RRC reconfiguration complete message indicates that the terminal device has completed the high-speed configuration.

In a possible design of the third aspect, the method further includes: The master network device disables the high-speed mode of the terminal device; and the master network device sends second indication information to the secondary network device, where the second indication information indicates the secondary network device to disable the high-speed mode of the terminal device.

In a possible design of the third aspect, the method further includes: The master network device receives third indication information from the secondary network device, where the third indication information indicates the master network device to disable the high-speed mode of the terminal device; and the master network device disables the high-speed mode of the terminal device based on the third indication information.

In this embodiment of this application, alternatively, the master network device and the secondary network device may synchronously disable the high-speed mode of the terminal device.

In a possible design of the third aspect, the method further includes: The master network device receives fourth indication information from the terminal device or a core network device, where the fourth indication information indicates that the terminal device supports a high-speed mode in a dual-connectivity scenario.

According to a fourth aspect, an embodiment of this application provides another communication method. The method may be performed by a secondary network device, or may be performed by a component (for example, a chip or a circuit) disposed in the secondary network device. The method includes: The secondary network device receives first indication information from a master network device, where the first indication information indicates the secondary network device to enable a high-speed mode of a terminal device; the secondary network device generates a high-speed configuration for the terminal device based on the first indication information; and the secondary network device sends the high-speed configuration to the master network device.

In a possible design of the fourth aspect, the first indication information is included in a secondary node addition request message, and the high-speed configuration is included in a secondary node addition request acknowledgment message; or the first indication information is included in a secondary node modification request message, and the high-speed configuration is included in a secondary node modification request acknowledgment message

In a possible design of the fourth aspect, the method further includes: The secondary network device receives an RRC reconfiguration complete message from the master network device, where the RRC reconfiguration complete message indicates that the terminal device has completed the high-speed configuration.

In a possible design of the fourth aspect, the method further includes: The secondary network device receives second indication information from the master network device, where the second indication information indicates the secondary network device to disable the high-speed mode of the terminal device; and the secondary network device disables the high-speed mode of the terminal device based on the second indication information.

In a possible design of the fourth aspect, the method further includes: The secondary network device disables the high-speed mode of the terminal device; and the secondary network device sends third indication information to the master network device, where the third indication information indicates the master network device to disable the high-speed mode of the terminal device.

In a possible design of the fourth aspect, the secondary network device includes a central unit CU and a distributed unit DU. That the secondary network device receives first indication information from a master network device may include: The CU in the secondary network device receives the first indication information from the master network device. That the secondary network device generates a high-speed configuration for the terminal device based on the first indication information may include: The CU of the secondary network device sends the first indication information to the DU in the secondary network device, so that the DU of the secondary network device generates the high-speed configuration based on the first indication information; and That the secondary network device sends the high-speed configuration to the master network device may include: The DU of the secondary network device sends the high-speed configuration to the CU of the secondary network device, and the CU of the secondary network device sends the high-speed configuration to the master network device.

For beneficial effects in various possible designs of the fourth aspect, refer to corresponding descriptions in the third aspect. Details are not described herein again.

According to a fifth aspect, an embodiment of this application provides a communication apparatus. The apparatus has a function of implementing the first network element in any one of the first aspect or the possible designs of the first aspect, has a function of implementing the second network element in any one of the second aspect or the possible designs of the second aspect, has a function of implementing the master network device in any one of the third aspect or the possible designs of the third aspect, or has a function of implementing the secondary network device in any one of the fourth aspect or the possible designs of the fourth aspect. The apparatus may be a network device, or may be a chip included in the network device. The function of the communication apparatus may be implemented by hardware, or may be implemented by hardware executing corresponding software. The hardware or the software includes one or more modules, units, or means (means) corresponding to the foregoing function.

In a possible design, a structure of the apparatus includes a processing module and a transceiver module. The processing module is configured to support the apparatus in performing a corresponding function of the first network element in any one of the first aspect or the possible designs of the first aspect, performing a corresponding function of the second network element in any one of the second aspect or the possible designs of the second aspect, performing a corresponding function of the master network device in any one of the third aspect or the possible designs of the third aspect, or performing a corresponding function of the secondary network device in any one of the fourth aspect or the possible designs of the fourth aspect. The transceiver module is configured to support communication between the apparatus and another communication device. For example, when the apparatus is a first network element, the apparatus may send, to a second network element, N groups of QoS profiles corresponding to a first QoS flow. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute computer program instructions stored in the memory, to enable the apparatus to perform the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect. Optionally, the apparatus further includes a communication interface, and the processor is coupled to the communication interface. When the apparatus is a network device, the communication interface may be a transceiver or an input/output interface. When the apparatus is a chip included in the network device, the communication interface may be an input/output interface of the chip. Optionally, the transceiver may be a transceiver circuit, and the input/output interface may be an input/output circuit.

According to a sixth aspect, an embodiment of this application provides a chip system, including a processor, where the processor is coupled to a memory, and the memory is configured to store a program or instructions. When the program or the instructions is/are executed by the processor, the chip system is enabled to implement the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a seventh aspect, an embodiment of this application provides a computer-readable storage medium, storing a computer program or instructions. When the computer program or the instructions is/are executed, a computer is enabled to perform the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect.

According to an eighth aspect, an embodiment of this application provides a computer program product. When a computer reads and executes the computer program product, the computer is enabled to perform the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect.

According to a ninth aspect, an embodiment of this application provides a communication system. The communication system includes the first network element and the second network element in the first aspect and the second aspect. Optionally, the communication system may further include at least one terminal device. Optionally, the communication system may further include a third network element.

According to a tenth aspect, an embodiment of this application provides a communication system. The communication system includes the master network device and the secondary network device in the third aspect and the fourth aspect. Optionally, the communication system may further include at least one terminal device. Optionally, the communication system may further include a core network device.

### BRIEF DESCRIPTION OF DRAWINGS

FIG. 1 is a schematic diagram of a network architecture of a communication system to which an embodiment of this application is applicable;
FIG. 2a, FIG. 2b, FIG. 2c, and FIG. 2d each are a schematic diagram of a dual connectivity scenario according to the embodiment of this application;
FIG. 3 is a schematic flowchart of a communication method according to an embodiment of this application;
FIG. 4a, FIG. 4b, FIG. 4c, and FIG. 4d each are a schematic application diagram of a communication method according to an embodiment of this application;
FIG. 5a and FIG. 5b each are a specific example of a communication method according to an embodiment of this application;
FIG. 6 is a schematic flowchart of another communication method according to an embodiment of this application;
FIG. 7 shows a specific implementation of a high-speed mode of synchronization between a master network device and a secondary network device in the another communication method according to an embodiment of this application;
FIG. 8 shows another specific implementation of a high-speed mode of synchronization between a master network device and a secondary network device in the another communication method according to an embodiment of this application;
FIG. 9 is a schematic diagram of a communication apparatus according to an embodiment of this application; and
FIG. 10 is a schematic diagram of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The technical solutions in embodiments of this application may be applied to various communication systems such as a global system for mobile communications (global system for mobile communications, GSM) system, a code division multiple access (code division multiple access, CDMA) system, and a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunication system (universal mobile telecommunication system, UMTS), a 5th generation (5th generation, 5G) communication system, a new radio (new radio, NR) system, or a future applied communication system, or another similar communication system.

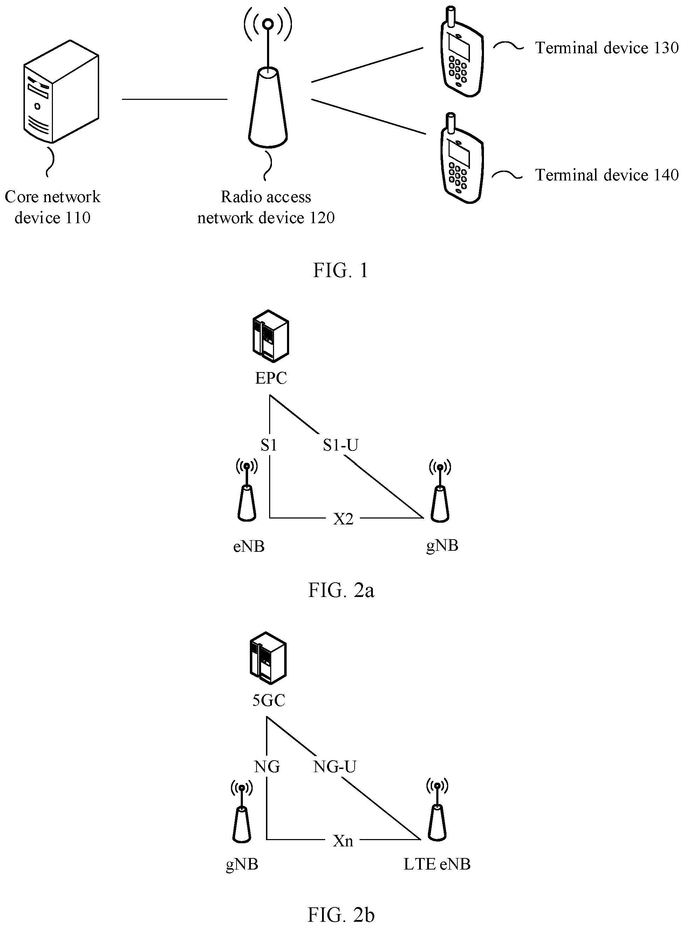

FIG. 1 is a schematic diagram of a network architecture of a communication system to which an embodiment of this application is applicable. The communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be independent and different physical devices, a function of the core network device and a logical function of the radio access network device may be integrated into a same physical device, or a part of functions of the core network device and a part of functions of the radio access network device may be integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, radio access network devices, and terminal devices that are included in the communication system are not limited in embodiments of this application.

The terminal device is a device having a wireless transceiver function, and is connected to the radio access network device in a wireless manner, to access the communication system. The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology used by the terminal device and a specific device form of the terminal device are not limited in embodiments of this application.

By way of example rather than limitation, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

The terminal device may alternatively be a vehicle-mounted module, a vehicle-mounted component, a vehicle-mounted chip, or a vehicle-mounted unit that is built in a vehicle as one or more components or units. The vehicle may use the vehicle-mounted module, a vehicle-mounted module assembly, the vehicle-mounted component, the vehicle-mounted chip, or the vehicle-mounted unit that is built in the vehicle to implement the method in this application.

The radio access network device is a device that is in a network and that is configured to connect the terminal device to a radio network device. The radio access network device is a node in a radio access network, may also be referred to as a base station, or may be referred to as a RAN node (or device). In this application, the radio access network device may be referred to as a network device for short. Unless otherwise specified, all network devices in the following content refer to the radio access network device. The radio access network device may be a base station (base station), an evolved NodeB (evolved NodeB, eNodeB) in an LTE system or an LTE-Advanced system (LTE-Advanced, LTE-A), a next generation NodeB (next generation NodeB, gNB) in a 5G communication system, or a transmission reception point (transmission reception point, TRP), a baseband unit (base band unit, BBU), a Wi-Fi access point (access point, AP), a base station in a future mobile communication system, an access node in a Wi-Fi system, or the like. The radio access network device may alternatively be a module or a unit that completes some functions of the base station. For example, the radio access network device may be a central unit (central unit, CU) or a distributed unit (distributed unit, DU). A specific technology used by the radio access network device and a specific device form of the radio access network device are not limited in embodiments of this application.

In a split deployment architecture in which the radio access network device includes a CU and a DU, one CU may be connected to one or more DUs, and there is a control plane interface between the CU and the DU. Specifically, the CU is configured to support protocols such as radio resource control (radio resource control, RRC), packet data convergence protocol (packet data convergence protocol, PDCP), and service data adaptation protocol (service data adaptation protocol, SDAP). The DU is configured to support a radio link control (radio link control, RLC) layer protocol, a medium access control (medium access control, MAC) layer protocol, and physical layer protocol.

In embodiments of this application, the network device and the terminal device may be deployed on the land, including an indoor device, an outdoor device, a handheld device, or a vehicle-mounted device; may be deployed on the water; or may be deployed on an airplane, a balloon, and a satellite in the air. Application scenarios of the network device and the terminal device are not limited in embodiments of this application.

The network device and the terminal device may communicate with each other by using a licensed spectrum, or may communicate with each other by using an unlicensed spectrum, or may communicate with each other by using both the licensed spectrum and the unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Embodiments of this application may be applied to a dual connectivity (dual connectivity, DC) scenario. The dual connectivity means that a terminal device accesses two network devices at the same time. One network device is a master network device, and the other network device is a secondary network device. The master network device may also be referred to as a master station or a master node (master node, MN). The secondary network device may also be referred to as a secondary station or a secondary node (secondary node, SN).

FIG. 2a to FIG. 2d each are a schematic diagram of a dual connectivity scenario according to an embodiment of this application. Dual connectivity used when a core network is an evolved packet core (evolved packet core, EPC) may also be referred to as an evolved universal terrestrial radio access new radio dual connectivity (E-UTRA NR dual connectivity, EN-DC) mode. For example, as shown in FIG. 2a, the core network is an EPC, a master network device is an LTE base station, and a secondary network device is an NR base station. In this scenario, there is an X2 interface between the LTE base station and the NR base station at least for a control plane connection and optionally for a user plane connection; there is an S1 interface between the LTE base station and the EPC at least for a control plane connection and optionally for a user plane connection; and there is an S 1-U interface between the NR base station and the EPC that may be for only a user plane connection. The LTE base station may provide an air interface resource for a terminal device by using at least one LTE cell. In this case, the at least one LTE cell is referred to as a master cell group (master cell group, MCG). Correspondingly, the NR base station may also provide an air interface resource for the terminal device by using at least one NR cell. In this case, the at least one NR cell is referred to as a secondary cell group (secondary cell group, SCG).

Dual connectivity used when the core network is a 5th generation core (5th generation core, 5GC), that is, a core network in a 5G communication system, may also be referred to as a new radio and evolved universal terrestrial radio access dual connectivity (NR E-UTRA dual connectivity, NE-DC) mode. For example, as shown in FIG. 2b, the core network is a 5GC, the LTE base station is a master network device, and the NR base station is a secondary network device. In this scenario, there is an Xn interface between the LTE base station and the NR base station at least for a control plane connection and optionally for a user plane connection; there is an NG interface between the LTE base station and the 5GC at least for a control plane connection and optionally for a user plane connection; and there is an NG-U interface between the NR base station and the 5GC that may be for only a user plane connection. The LTE base station may provide an air interface resource for the terminal device by using at least one LTE cell. In this case, the at least one LTE cell is referred to as an MCG. Correspondingly, the NR base station may also provide an air interface resource for the terminal by using at least one NR cell. In this case, the at least one NR cell is referred to as an SCG.

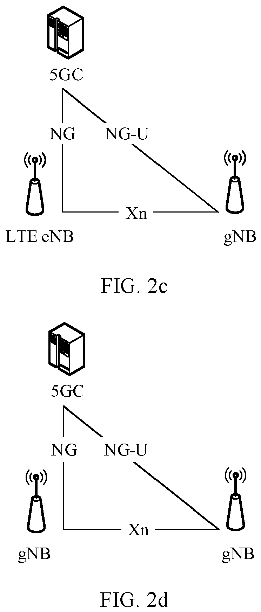

As shown in FIG. 2c, the core network is a 5GC, an NR base station is a master network device, and an LTE base station is a secondary network device. In this scenario, there is an Xn interface between the NR base station and the LTE base station at least for a control plane connection and optionally for a user plane connection; there is an NG interface between the NR base station and the 5GC at least for a control plane connection and optionally for a user plane connection; and there is an NG-U interface between the NR base station and the 5GC that may be for only a user plane connection. In this case, the NR base station may provide an air interface resource for the terminal device by using at least one NR cell. In this case, the at least one NR cell is referred to as an MCG. Correspondingly, the LTE base station may also provide an air interface resource for the terminal device by using at least one LTE cell. In this case, the at least one LTE cell is referred to as an SCG.

As shown in FIG. 2d, when the core network is a 5GC, both a master network device and a secondary network device are NR base stations. There is an Xn interface between the NR master base station and the NR secondary base station at least for a control plane connection and optionally for a user plane connection; there is an NG interface between the NR master base station and the 5GC at least for a control plane connection and optionally for a user plane connection; and there is an NG-U interface between the NR secondary base station and the 5GC that may be for only a user plane connection. In this case, the NR master base station may provide an air interface resource for the terminal device by using at least one NR cell. In this case, the at least one NR cell is referred to as an MCG. Correspondingly, the NR secondary base station may also provide an air interface resource for the terminal device by using at least one NR cell. In this case, the at least one NR cell is referred to as an SCG.

It should be noted that the terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

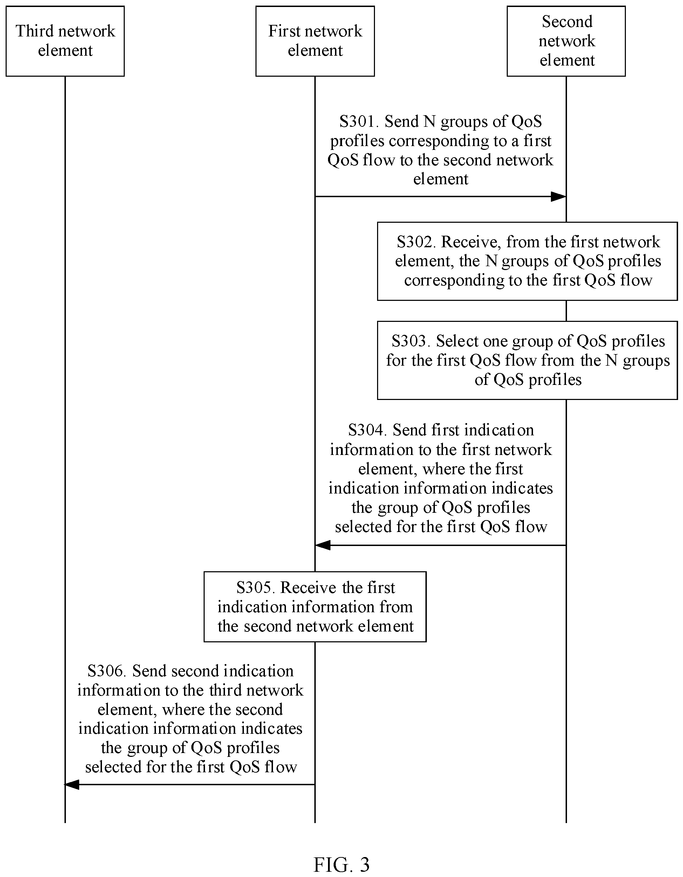

FIG. 3 is a schematic flowchart of a communication method according to an embodiment of this application. The method includes the following steps.

Step S301. A first network element sends, to a second network element, N groups of QoS profiles (QoS profiles) corresponding to a first QoS flow, where N is an integer greater than or equal to 1.

Optionally, the first network element may further send an identifier (namely, a QoS flow ID) of the first QoS flow to the second network element.

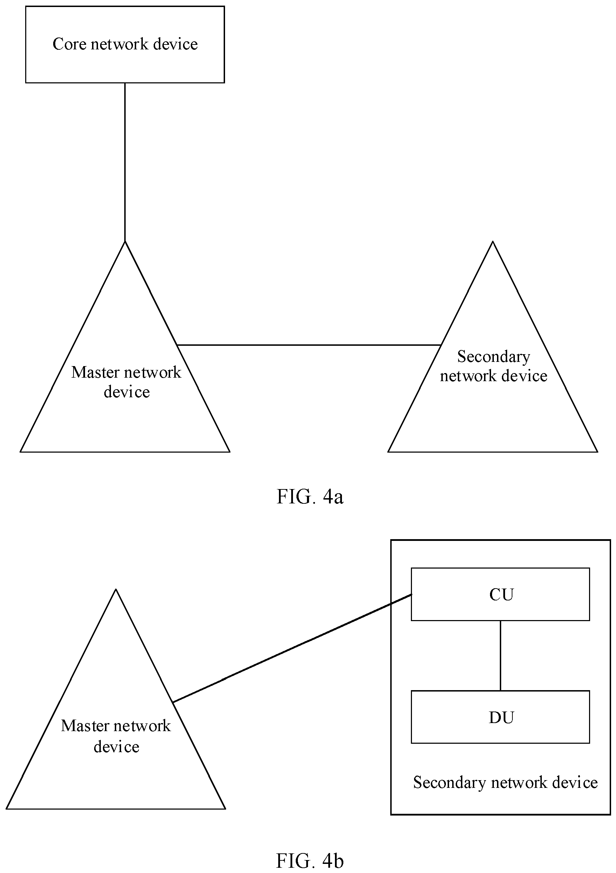

In an implementation, as shown in FIG. 4a, dual connectivity may be configured for a terminal device. The first network element may be a master network device accessed by the terminal device, the second network element may be a secondary network device accessed by the terminal device, and a third network element may be a core network device. The secondary network device is connected to the master network device, and the master network device further has a control plane connection to the core network device. For example, the core network device may be an access and mobility management function (access and mobility management function, AMF) entity. In this implementation, when determining to offload the first QoS flow of the terminal device to the secondary network device for transmission, the master network device may send the identifier of the first QoS flow and the N groups of QoS profiles corresponding to the first QoS flow to the secondary network device. Optionally, the master network device may use a CU-DU separate architecture. In this case, the master network device may be specifically a CU of the master network device. Similarly, the secondary network device may also use a CU-DU separate architecture. In this case, the secondary network device is specifically a CU of the secondary network device.

It should be noted that, in the implementation shown in FIG. 4a, after configuring dual connectivity for the terminal device, the master network device may perform step S301 of sending, to the secondary network device, the N groups of QoS profiles corresponding to the first QoS flow. Alternatively, the master network device may perform the method in step S301 to step S306 in a process of preparing to configure dual connectivity for the terminal device. For example, when adding a secondary network device, the master network device may negotiate about QoS profiles with the secondary network device, report, to the core network device, a group of QoS profiles selected by the secondary network device, and then provide a dual connectivity configuration for the terminal device. This is not limited in this application.

In another implementation, as shown in FIG. 4b, dual connectivity may be configured for a terminal device, and a secondary network device accessed by the terminal device uses a CU-DU separate architecture. The first network element may be a CU of the secondary network device accessed by the terminal device, and the second network element may be a DU of the secondary network device accessed by the terminal device. The secondary network device is connected to a master network device, and the master network device is further connected to a core network device. For example, the core network device may be an AMF. In this implementation, when the master network device determines to offload the first QoS flow of the terminal device to the secondary network device for transmission, the CU of the secondary network device may receive, from the master network device, the identifier of the first QoS flow and the N groups of QoS profiles corresponding to the first QoS flow, and then send the identifier of the first QoS flow and the N groups of QoS profiles corresponding to the first QoS flow to the DU of the secondary network device.

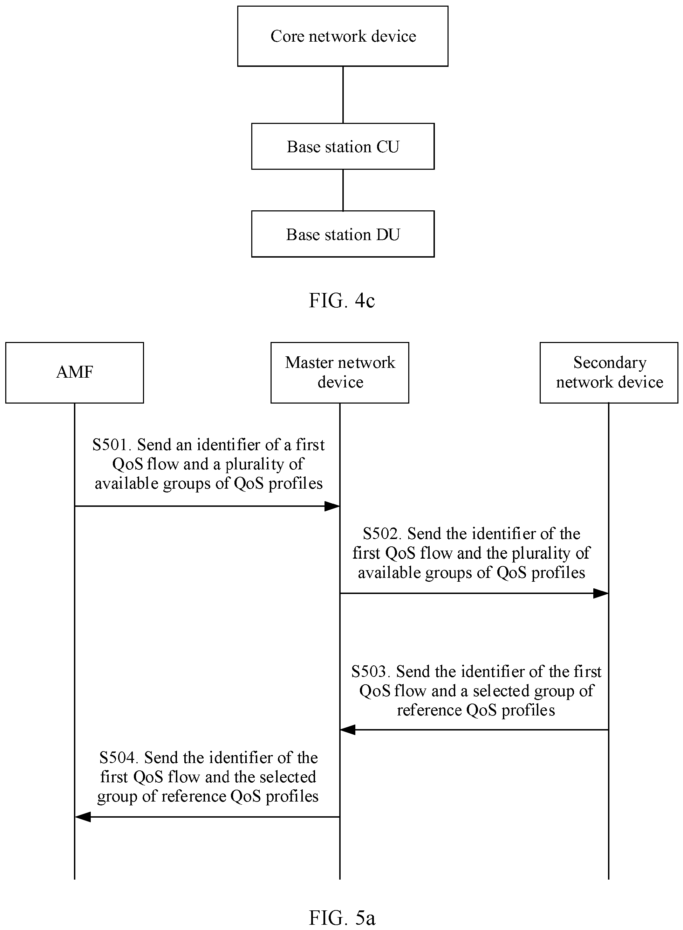

In still another implementation, as shown in FIG. 4c, a network device accessed by a terminal device uses a CU-DU separate architecture. The first network element may be a CU of the network device accessed by the terminal device, the second network element may be a DU of the network device accessed by the terminal device, and a third network element may be a core network device. The network device is connected to the core network device. For example, the core network device may be an AMF. In this implementation, the CU of the network device accessed by the terminal device may receive, from the core network device, the identifier of the first QoS flow and the N groups of QoS profiles corresponding to the first QoS flow, and then send the identifier of the first QoS flow and the N groups of QoS profiles corresponding to the first QoS flow to the DU of the network device.

In this embodiment of this application, a group of QoS profiles corresponding to the QoS flow may include a value of one or more of the following QoS parameters: an uplink maximum flow bit rate (maximum flow bit rate, MFBR), a downlink MFBR, an uplink guaranteed flow bit rate (guaranteed flow bit rate, GFBR), a downlink GFBR, an uplink maximum packet loss rate (maximum packet loss rate, MPLR), a downlink MPLR, a packet delay budget (packet delay budget, PDB), a packet error rate (packet error rate, PER), a 5th generation QoS identifier (5G QoS identifier, 5QI), a maximum data burst volume (maximum data burst volume, MDBV), and a QoS flow priority. Certainly, the group of QoS profiles may further include values of other QoS parameters, which are not listed one by one herein in this application. It should be noted that the group of QoS profiles corresponding to the QoS flow may also be referred to as a group/set of QoS parameters or QoS profiles corresponding to the QoS flow, or may have another name. This is not limited in this application.

For example, a group of QoS profiles may include an uplink MFBR, a downlink MFBR, an uplink GFBR, and a downlink GFBR, where maximum values of the uplink MFBR, the downlink MFBR, the uplink GFBR, and the downlink GFBR are all 4 Gbps.

Step S302. The second network element receives, from the first network element, the N groups of QoS profiles corresponding to the first QoS flow.
Step S303. The second network element selects one group of QoS profiles for the first QoS flow from the N groups of QoS profiles.
Step S304. The second network element sends first indication information to the first network element, where the first indication information indicates the group of QoS profiles selected by the second network element for the first QoS flow, and the group of QoS profiles is one of the N groups of QoS profile.

In this embodiment of this application, the second network element may select, from the N groups of QoS profiles based on QoS that can be satisfied by the second network element, a group of QoS profiles that can meet a highest QoS requirement, and then notify the first network element of the selected group of QoS profiles based on the first indication information. The first indication information may be an index of the selected group of QoS profiles in the N groups of QoS profiles, or may be a specific value of each QoS parameter included in the group of QoS profiles. This is not limited in this application.

It should be noted that, in embodiments shown in FIG. 4b and FIG. 4c, because the second network element uses the CU-DU separate architecture, in a specific process of selecting QoS profiles, the CU or the DU may specifically determine the QoS parameters included in the QoS profiles, or the CU may determine a part of the QoS parameters and the DU may determine the other part of the QoS parameters. This is not limited in this application.

Step S305. The first network element receives the first indication information from the second network element.

Optionally, the first network element may further receive, from the third network element, the identifier of the first QoS flow and M groups of QoS profiles corresponding to the first QoS flow, and then determine the N groups of QoS profiles based on the received M groups of QoS profiles. The N groups of QoS profiles may be a subset of the M groups of QoS profiles. For example, the first network element may receive, from the second network element, assistance information indicating the QoS that can be satisfied by the second network element, and then determine the N groups of QoS profiles from the M groups of QoS profiles based on the received assistance information, where the N groups of QoS profiles are a part or all of the M groups of QoS profiles. In other words, one or more groups of QoS profiles sent by the first network element to the second network element may be the same as or different from one or more groups of QoS profiles received by the first network element from the third network element. The assistance information may include a specific value of each QoS parameter in a group of QoS profiles, indicating the QoS that can be satisfied by the second network element.

In other words, the first network element may directly forward, to the second network element, the M groups of QoS profiles that correspond to the first QoS flow and that are received from the third network element as the N groups of QoS profiles. In this case, N is equal to M. Alternatively, the first network element may perform filtering on the M groups of QoS profiles that correspond to the first QoS flow and that are received from the third network element, and send a part of groups of QoS profiles (namely, the N groups of QoS profiles) in the M groups of QoS profiles to the second network element. In this case, N is less than M.

Optionally, on this basis, after determining the N groups of QoS profiles from the M groups of QoS profiles, the first network element may further modify a value of one or more QoS parameters in one or more of the N groups of QoS profiles, to obtain final N groups of QoS profiles.

For example, it is assumed that the first network element is a master network device accessed by the terminal device, the second network element is a secondary network device accessed by the terminal device, and the third network element is a core network device. The master network device may receive, from the core network device, the identifier of the first QoS flow and the M groups of QoS profiles corresponding to the first QoS flow. If the master network device determines to configure the first QoS flow as a bearer anchored on the secondary network device, the master network device may send, to the secondary network device, the M groups of QoS profiles received from the core network device. The secondary network device selects a group of QoS profiles to be applied to the first QoS flow, adds an index of the selected group of QoS profiles to the first indication information, and sends the first indication information to the master network device.

If the master network device determines to configure the first QoS flow as a bearer anchored on the master network device, the master network device may determine N groups of QoS profiles from the received M groups of QoS profiles, and then send the N groups of QoS profiles to the secondary network device. The secondary network device selects a group of QoS profiles to be applied to the first QoS flow, adds an index of the selected group of QoS profiles to the first indication information, and sends the first indication information to the master network device. The N groups of QoS profiles may be different from the M groups of QoS profiles, and the difference may mean that the N groups and the M groups are different in quantity, or values of specific QoS parameters in any one or more of the N groups of QoS profiles are different from values of specific QoS parameters in one or more of the M groups of QoS profiles. For example, the master network device may remove several groups of QoS profiles from the M groups of QoS profiles, and then send remaining N groups of QoS profiles to the secondary network device. Alternatively, the master network device may further modify a specific value of one or more QoS parameters in one or more of the remaining N groups of QoS profiles, to obtain final N groups of QoS profiles. In this case, N is an integer less than M. Alternatively, the master network device may directly modify a specific value of one or more QoS parameters in one or more of the M groups of QoS profiles, to obtain final M groups of QoS profiles. In this case, N is equal to M, and the M groups of QoS profiles are the N groups of QoS profiles.

Step S306. The first network element sends second indication information to the third network element, where the second indication information indicates the group of QoS profiles selected for the first QoS flow.

In this embodiment of this application, the second indication information may be an index of the selected group of QoS profiles in the M groups of QoS profiles, or may be a specific value of each QoS parameter included in the group of QoS profiles. This is not limited in this application.

It should be noted that, in this embodiment of this application, if both the first indication information and the second indication information are indexes, the first indication information and the second indication information may have a same value or different values, but indicate a same group of QoS profiles. That is, the first indication information and the second indication information indicate a same group of QoS profiles, but the index of the group of QoS profiles in the N groups of QoS profiles sent by the first network element to the second network element may be the same as or different from the index of the group of QoS profiles in the M groups of QoS profiles received by the first network element from the third network element. This may be because a quantity of the N groups of QoS profiles sent by the first network element to the third network element is different from a quantity of the M groups of QoS profiles received by the first network element from the third network element, that is, N is less than M. Even if N is equal to M, that is, the first network element sends the M groups of QoS profiles received from the third network element to the second network element without deleting any one of the M groups of QoS profiles, when sending the M groups of QoS profiles, the first network element may change an arrangement order of the M groups of QoS profiles, leading to a change in an index of a same group of QoS profiles.

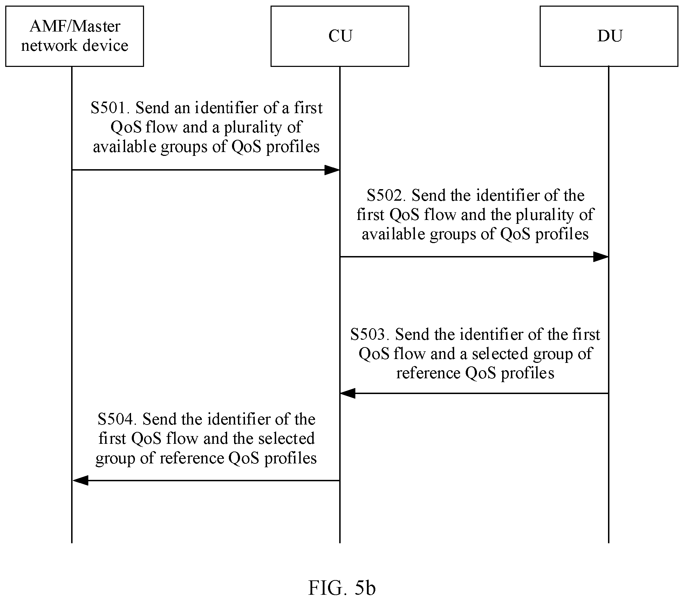

FIG. 5a and FIG. 5b are two specific examples of the communication method according to this embodiment of this application. As shown in FIG. 5a, dual connectivity has been configured for the terminal device, the first network element is a master network device accessed by the terminal device, the second network element is a secondary network device accessed by the terminal device, and the third network element is an AMF. In step S501, the AMF may send an identifier (for example, a QFI) of a first QoS flow and a plurality of available groups of QoS profiles to the master network device. Optionally, there may be a plurality of protocol data unit (protocol data unit, PDU) sessions, and identifiers of QoS flows in different PDU sessions may be the same. Therefore, in step S501, the AMF may further send, to the master network device, an identifier of a PDU session to which the first QoS flow belongs. In step S502, the master network device may send, to the secondary network device, the identifier of the first QoS flow that is received from the AMF and the plurality of available groups of QoS profiles. In step S503, the secondary network device may send, to the master network device, the identifier of the first QoS flow and a group of reference QoS profiles selected from the plurality of available groups of QoS profiles based on quality of service that can be satisfied by the secondary network device. In step S504, the master network device may send the identifier of the first QoS flow and the selected group of reference QoS profiles to the AMF.

As shown in FIG. 5b, two possible application scenarios may be included. One of the application scenarios is: Dual connectivity is not configured for the terminal device, the first network element is a CU of a network device accessed by the terminal device, the second network element is a DU of the network device accessed by the terminal device, and the third network element is an AMF; or dual connectivity is configured for the terminal, and the network device is specifically a master network device accessed by the terminal device. A application scenario is: Dual connectivity is configured for the terminal device, the first network element is a CU of a secondary network device accessed by the terminal device, the second network element is a DU of the secondary network device accessed by the terminal device, and the third network element is a master network device accessed by the terminal device. A procedure shown in FIG. 5b is similar to that in FIG. 5a. Details are not described herein again.

Optionally, in a possible implementation, the first network element may receive assistance information from the second network element, where the assistance information indicates QoS that can be satisfied by the second network element. Optionally, the assistance information indicates a highest QoS requirement that can be satisfied by the second network element. In this way, after receiving, from the third network element, M groups of QoS profiles corresponding to a first QoS flow, the first network element may select, based on the assistance information, a group of QoS profiles that has a highest QoS requirement and that can be satisfied by the second network element, and then send the group of QoS profiles to the second network element. Further, after receiving acknowledgment information (for example, an ACK) for the group QoS profiles from the second network element, the first network element may send second indication information to the third network element, where the second indication information indicates the selected group of QoS profiles.

It can be learned from this that, in this embodiment of this application, two nodes on an access side may be the master network device and the secondary network device that are accessed by the terminal device. If the master network device determines to offload the first QoS flow to the secondary network device for transmission, the master network device may send a plurality of groups of QoS profiles corresponding to the first QoS flow to the secondary network device, and the secondary network device selects the applied QoS profiles for the first QoS flow from the plurality of groups of QoS profiles, and then indicates the selected group of QoS profiles to the master network device. In this way, according to the technical solution, the secondary network device can participate in selection of QoS profiles, to ensure that the QoS parameter of the first QoS flow offloaded to the secondary network device matches QoS that can be satisfied by the secondary network device. This effectively guarantees quality of service of a service and improves service experience of users.

Similarly, the two nodes on the access side may be the CU and the DU of the network device accessed by the terminal device. Because a QoS flow of a service is usually carried on the DU for transmission, the CU sends, to the DU, a plurality of groups of QoS profiles corresponding to the QoS flow, and the DU selects a group of appropriate QoS profiles from the plurality of groups of QoS profiles, and feeds back the group of appropriate QoS profiles to the CU. In this way, finally selected QoS profiles can match quality of service that can be guaranteed by the DU. This effectively guarantees quality of service of a service and improves service experience of users.

Optionally, in a possible implementation, selection of some QoS parameters in the QoS profiles may be completed by the CU, and selection of remaining QoS parameters may be completed by the DU. In this case, the QoS profiles sent by the CU to the DU may be different from QoS profiles received by the CU from a core network or the master network device. Specifically, QoS parameters included in the QoS profiles sent by the CU to the DU may be a part of QoS parameters included in the QoS profiles received by the CU.

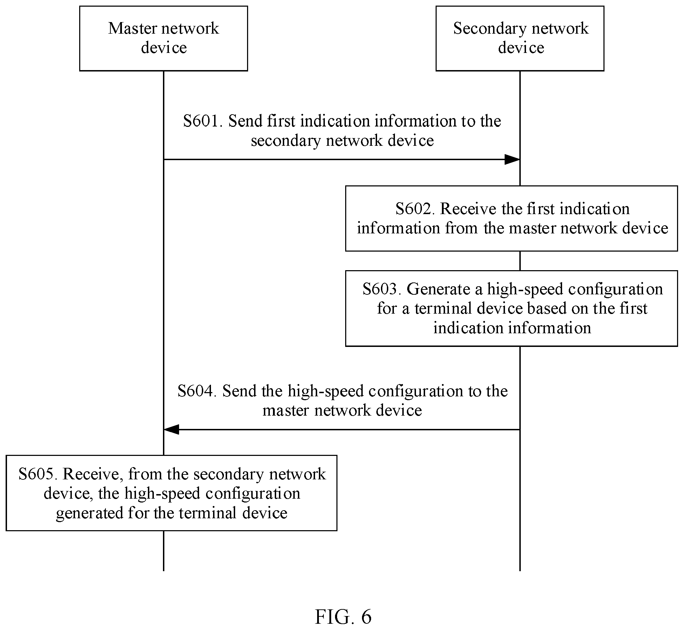

FIG. 6 is a schematic flowchart of another communication method according to an embodiment of this application. The method includes the following steps.

Step S601. A master network device sends first indication information to a secondary network device, where the first indication information indicates the secondary network device to enable a high-speed (high speed) mode of a terminal device.

The master network device may also be referred to as a master node, for example, may be a master base station. The secondary network device may also be referred to as a secondary node, for example, may be a secondary base station.

This embodiment of this application may be applied to a scenario in which the terminal device is in a high-speed moving state, for example, on a high-speed railway or a highway. In this scenario, a network device (for example, the master network device or the secondary network device) may enable a high-speed mode for an accessed terminal device. For example, the network device may determine, by using a preset algorithm, whether the terminal device is in high-speed movement or whether the terminal device is a high-speed user, and further determine whether to enable the high-speed mode for the terminal device. In an example, the network device may detect a moving speed of the terminal device, determine, as a high-speed user, a terminal device whose detected moving speed exceeds a specified threshold, and further enable a high-speed mode for the terminal device. The high-speed mode means that the network device may provide dedicated physical layer configurations for the terminal device. These configurations may also be referred to as high-speed configurations, and the high-speed configurations indicate the terminal device to work according to an enhanced radio resource management (radio resource management, RRM) requirement in the high-speed mode, and/or indicate the terminal device to work according to a demodulation performance requirement in the high-speed mode, where the high-speed configurations may also be referred to as high-speed enhanced configurations.

On the basis of enabling the high-speed mode for the terminal device, the network device may further determine to configure dual connectivity for the accessed terminal device. It should be noted that a sequence of enabling the high-speed mode for the terminal device and configuring dual connectivity for the terminal device is not limited in this embodiment of this application.

In specific implementation of step S601, after determining to enable the high-speed mode of the terminal device, the master network device may send the first indication information to the secondary network device, to indicate the secondary network device to also enable the high-speed mode of the terminal device, so that synchronization of the high-speed mode can be kept between the master network device and the secondary network device, that is, consistency of enabling the high-speed mode is kept. In view of this, the first indication information may also be understood as indicating the master network device to determine to enable the high-speed mode of the terminal device.

It should be noted that after the master network device determines to enable the high-speed mode of the terminal device, the master network device may immediately enable the high-speed mode of the terminal device, for example, send, to the terminal device, a high-speed configuration generated by the master network device, so that the terminal device can apply the high-speed configuration as soon as possible. Alternatively, the master network device may determine a start moment by negotiating with the secondary network device, and then simultaneously enable the high-speed mode of the terminal device at the start moment. For example, the master network device sends a high-speed configuration generated by the master network device and a high-speed configuration generated by the secondary network device to the terminal device together. This is not limited in this application.

Step S602. The secondary network device receives the first indication information from the master network device.

Step S603. The secondary network device generates a high-speed configuration for the terminal device based on the first indication information.

Step S604. The secondary network device sends the high-speed configuration to the master network device.

Specifically, if the secondary network device uses a CU-DU separate architecture, in a specific embodiment of step S602 to step S604, a CU of the secondary network device may receive the first indication information from the master network device, and then send the first indication information to a DU of the secondary network device. Further, the DU of the secondary network device may generate the high-speed configuration for the terminal device based on the first indication information, and then send the generated high-speed configuration to the CU of the secondary network device, and the CU sends the high-speed configuration to the master network device.

Step S605. The master network device receives, from the secondary network device, the high-speed configuration generated by the secondary network device for the terminal device.

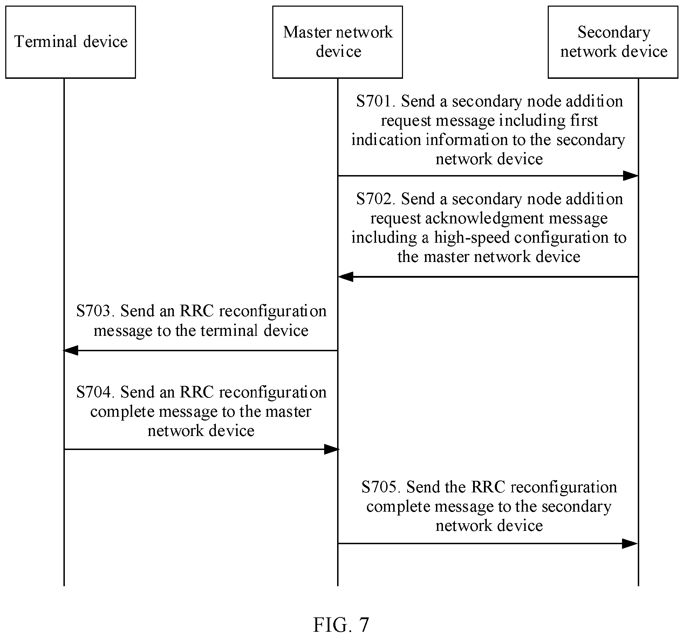

In an implementation, the first indication information may be included in a secondary node addition request message, and the high-speed configuration generated by the secondary network device may be included in a secondary node addition request acknowledgment message. In other words, the master network device may perform the foregoing method in a process of configuring dual connectivity for the terminal device, to synchronize the high-speed mode between the master network device and the secondary network device. As shown in FIG. 7, in step S701, if the master network device determines to configure dual connectivity for the terminal device, the master network device may send a secondary node addition request message to the secondary network device, where the secondary node addition request message includes the first indication information. After receiving the first indication information, the secondary network device may determine to enable the high-speed mode of the terminal device, generate the corresponding high-speed configuration for the terminal device, and further send a secondary node addition request acknowledgment message to the master network device in step S702, where the secondary node addition request acknowledgment message includes the high-speed configuration generated by the secondary network device.

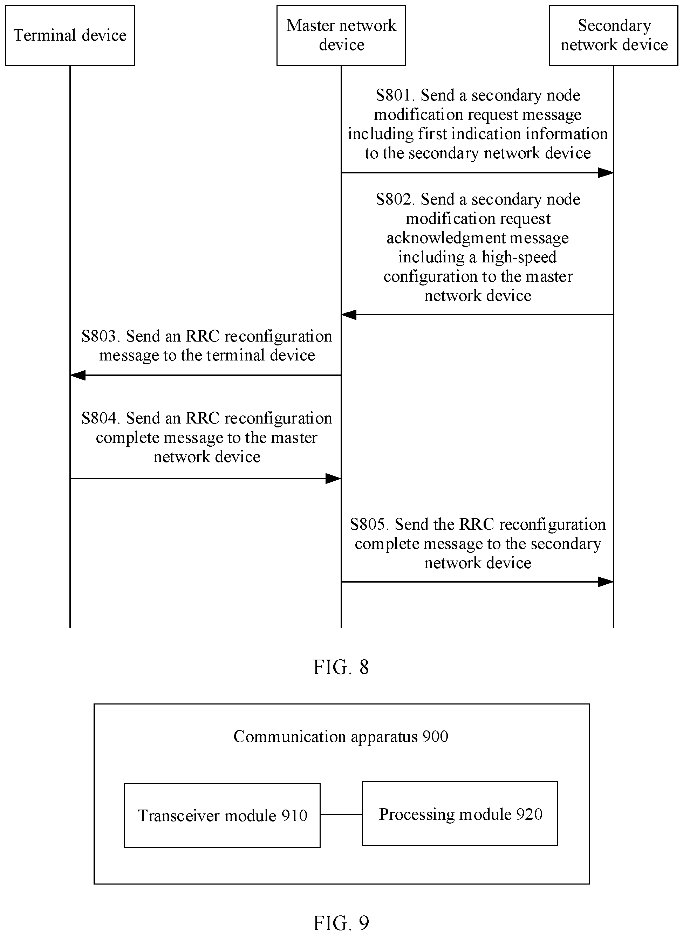

In another implementation, the first indication information may be included in a secondary node modification request message, and the high-speed configuration generated by the secondary network device may be included in a secondary node modification request acknowledgment message. In other words, the master network device may perform the foregoing method in a process of modifying a dual connectivity configuration for the terminal device, to synchronize the high-speed mode between the master network device and the secondary network device. As shown in FIG. 8, in step S801, if the master network device determines to modify the dual connectivity configuration for the terminal device, the master network device may send a secondary node modification request message to the secondary network device, where the secondary node modification request message includes the first indication information. After receiving the first indication information, the secondary network device may determine to enable the high-speed mode of the terminal device, generate the corresponding high-speed configuration for the terminal device, and further send a secondary node modification request acknowledgment message to the master network device in step S802, where the secondary node modification request acknowledgment message includes the high-speed configuration generated by the secondary network device.

After step S605, as shown in step S703, step S704, and step S705 in FIG. 7, and step S803, step S804, and step S805 in FIG. 8, the master network device may further send an RRC reconfiguration message to the terminal device, where the RRC reconfiguration message includes the high speed configuration generated by the secondary network device. After completing the high-speed configuration, the terminal device may send an RRC reconfiguration complete message to the master network device. The RRC reconfiguration complete message indicates that the terminal device has completed the high-speed configuration provided by the secondary network device. Further, the master network device may further the received RRC reconfiguration complete message to the secondary network device.

Optionally, in this embodiment of this application, the master network device determines to disable the high-speed mode of the terminal device, and sends second indication information to the secondary network device. The second indication information indicates the secondary network device to disable the high-speed mode of the terminal device. Alternatively, it may be understood that the second indication information notifies the secondary network device that the master network device determines to disable the high-speed mode of the terminal device. The master network device may further generate a high-speed mode release configuration for the terminal device. Similarly, after receiving the second indication information, the secondary network device may also generate a high-speed mode release configuration for the terminal device, and then send the release configuration to the master network device. In this way, the master network device may send, the high-speed mode release configuration generated by the master network device and the high-speed mode release configuration generated by the secondary network device together to the terminal device, so that the master network device and the secondary network device keep consistent in whether to disable the high-speed mode.

Optionally, in this embodiment of this application, the secondary network device may alternatively determine to disable the high-speed mode of the terminal device, and sends third indication information to the master network device. The third indication information indicates the master network device to disable the high-speed mode of the terminal device. Alternatively, it may be understood that the third indication information notifies the master network device that the secondary network device determines to disable the high-speed mode of the terminal device. The secondary network device may further generate a high-speed mode release configuration for the terminal device, and send the high-speed mode release configuration to the master network device, for example, may send the high-speed mode release configuration to the master network device together with the third indication information. In this way, after receiving the third indication information, the master network device may also generate a high-speed mode release configuration for the terminal device, and then send the high-speed mode release configuration generated by the master network device and the high-speed mode release configuration generated by the secondary network device together to the terminal device, so that the master network device and the secondary network device keep consistent in whether to disable the high-speed mode.

According to the foregoing technical solution, enabling and disabling of the high-speed mode can be consistent between the master network device and the secondary network device that are accessed by the terminal device, to effectively enhance stability and reliability of service transmission of the terminal device, and improve service experience.

Optionally, the master network device may receive fourth indication information from the terminal device or a core network device, where the fourth indication information indicates that the terminal device supports a high-speed mode in a dual-connectivity scenario. The fourth indication information may alternatively be understood as capability information of the terminal device, for indicating whether the terminal device has a capability of supporting a high-speed enhanced configuration in a dual-connectivity scenario.

Optionally, in a possible implementation, the secondary network device may trigger enabling of the high-speed mode. To be specific, the secondary network device may detect by itself that the terminal device is in the high-speed moving state, determine to enable the high-speed mode of the terminal device, and then send, to the master network device, the high-speed configuration generated for the terminal device and indication information indicating to enable the high-speed mode of the terminal device. For example, the secondary network device may actively send a secondary node modification request message to the master network device, where the secondary node modification request message carries the high-speed configuration generated by the secondary network device and the indication information indicating to enable the high-speed mode of the terminal device. A specific implementation of the indication information is similar to that of the first indication information. Details are not described herein again.

Similarly, in the scenario in which the secondary network device triggers enabling of the high-speed mode, the master network device may determine to disable the high-speed mode of the terminal device, and send the second indication information to the secondary network device, to indicate the secondary network device to disable the high-speed mode of the terminal device. Alternatively, the secondary network device may determine to disable the high-speed mode of the terminal device, and send the third indication information to the master network device, to indicate the master network device to disable the high-speed mode of the terminal device.

It can be learned that in this embodiment of this application, the two operations of triggering enabling of the high-speed mode of the terminal device and triggering disabling of the high-speed mode of the terminal device may be independent of each other. The master network device may initiate enabling or disabling of the high-speed mode, or the secondary network device may initiate enabling or disabling of the high-speed mode.

Specifically, in a scenario in which the master network device triggers enabling of the high-speed mode, the master network device may trigger disabling of the high-speed mode, or the secondary network device may trigger disabling of the high-speed mode. In a scenario in which the secondary network device triggers enabling of the high-speed mode, the master network device may trigger disabling of the high-speed mode, or the secondary network device may trigger disabling of the high-speed mode.

An embodiment of this application further provides a communication apparatus. FIG. 9 is a schematic diagram of a structure of a communication apparatus according to an embodiment of this application. The communication apparatus 900 includes a transceiver module 910 and a processing module 920. The communication apparatus may be configured to implement functions of the network device in any one of the foregoing method embodiments. For example, the communication apparatus may be a network device or a chip included in the network device.

The communication apparatus may serve as a first network element or a second network element to perform the method embodiment shown in FIG. 3. The first network element may be a master network device accessed by a terminal device. Correspondingly, the second network element may be a secondary network device accessed by the terminal device, and a third network element may be a core network device. Alternatively, the first network element may be a central unit CU of a secondary network device accessed by a terminal device. Correspondingly, the second network element may be a distributed unit DU of the secondary network device accessed by the terminal device, and a third network element may be a master network device accessed by the terminal device. Alternatively, the first network element may be a CU of a network device accessed by a terminal device. Correspondingly, the second network element may be a DU of the network device accessed by the terminal device, and a third network element may be a core network device.

For example, when the communication apparatus serves as the first network element and performs the method embodiment shown in FIG. 3, the transceiver module 910 is configured to: send, to a second network element, N groups of QoS profiles corresponding to a first QoS flow, where N is an integer greater than or equal to 1; and receive first indication information from the second network element, where the first indication information indicates a group of QoS profiles selected by the second network element for the first QoS flow, and the group of QoS profiles selected for the first QoS flow is one of the N groups of QoS profiles. The processing module 920 is configured to send second indication information to a third network element via the transceiver module 910, where the second indication information indicates the group of QoS profiles selected for the first QoS flow.

In a possible design, the transceiver module 910 is further configured to receive, from the third network element, M groups of QoS profiles corresponding to the first QoS flow. The processing module 920 is further configured to determine the N groups of QoS profiles based on the M groups of QoS profiles, where M is an integer greater than or equal to N.

In a possible design, the transceiver module 910 is further configured to receive assistance information from the second network element, where the assistance information indicates quality of service QoS that can be satisfied by the second network element. The processing module 920 is further configured to determine the N groups of QoS profiles from the M groups of QoS profiles based on the assistance information.

In a possible design, the processing module 920 is further configured to modify a value of one or more QoS parameters in one or more of the N groups of QoS profiles.

When the communication apparatus serves as the second network element and performs the method embodiment shown in FIG. 3, the transceiver module 910 is configured to receive, from a first network element, N groups of QoS profiles corresponding to a first QoS flow, where N is an integer greater than or equal to 1. The processing module 920 is configured to select one group of QoS profiles for the first QoS flow from the N groups of QoS profiles. The transceiver module 910 is configured to send first indication information to the first network element, where the first indication information indicates the group of QoS profiles selected by the second network element for the first QoS flow.

In a possible design, the transceiver module 910 is further configured to send assistance information to the first network element, where the assistance information indicates quality of service QoS that can be satisfied by the second network element.

Alternatively, the communication apparatus may serve as a master network device or a secondary network device to perform the method embodiment shown in FIG. 6. The master network device may be a master network device accessed by a terminal device when the terminal device is in dual connectivity, and the secondary network device may be a secondary network device accessed by the terminal device when the terminal device is in dual connectivity.

For example, when the communication apparatus serves as the master network device to perform the method embodiment shown in FIG. 6, the transceiver module 910 is configured to send first indication information to a secondary network device, where the first indication information indicates the secondary network device to enable a high-speed mode of a terminal device. The processing module 920 is configured to receive, from the secondary network device via the transceiver module 910, a high-speed configuration generated by the secondary network device for the terminal device.

In a possible design, the first indication information is included in a secondary node addition request message, and the high-speed configuration is included in a secondary node addition request acknowledgment message; or the first indication information is included in a secondary node modification request message, and the high-speed configuration is included in a secondary node modification request acknowledgment message.

In a possible design, the transceiver module is configured to: send an RRC reconfiguration message to the terminal device, where the RRC reconfiguration message includes the high-speed configuration; and receive an RRC reconfiguration complete message from the terminal device, and send the RRC reconfiguration complete message to the secondary network device, where the RRC reconfiguration complete message indicates that the terminal device has completed the high-speed configuration.

In a possible design, the processing module 920 is configured to disable the high-speed mode of the terminal device. The transceiver module 910 is configured to send second indication information to the secondary network device, where the second indication information indicates the secondary network device to disable the high-speed mode of the terminal device.

In a possible design, the transceiver module 910 is configured to receive third indication information from the secondary network device, where the third indication information indicates the master network device to disable the high-speed mode of the terminal device. The processing module 920 is configured to disable the high-speed mode of the terminal device based on the third indication information.

In a possible design, the transceiver module 910 is further configured to receive fourth indication information from the terminal device or a core network device, where the fourth indication information indicates that the terminal device supports a high-speed mode in a dual-connectivity scenario.

When the communication apparatus serves as the secondary network device to perform the method embodiment shown in FIG. 6, the transceiver module 910 is configured to receive first indication information from a master network device, where the first indication information indicates the secondary network device to enable a high-speed mode of a terminal device. The processing module 920 is configured to generate a high-speed configuration for the terminal device based on the first indication information. The transceiver module 910 is further configured to send the high-speed configuration to the master network device.

In a possible design, the first indication information is included in a secondary node addition request message, and the high-speed configuration is included in a secondary node addition request acknowledgment message; or the first indication information is included in a secondary node modification request message, and the high-speed configuration is included in a secondary node modification request acknowledgment message.

In a possible design, the transceiver module 910 is further configured to receive an RRC reconfiguration complete message from the master network device, where the RRC reconfiguration complete message indicates that the terminal device has completed the high-speed configuration.

In a possible design, the transceiver module 910 is further configured to receive second indication information from the master network device, where the second indication information indicates the secondary network device to disable the high-speed mode of the terminal device. The processing module 920 is further configured to disable the high-speed mode of the terminal device based on the second indication information.

In a possible design, the processing module 920 is further configured to disable the high-speed mode of the terminal device. The transceiver module 910 is further configured to send third indication information to the master network device, where the third indication information indicates the master network device to disable the high-speed mode of the terminal device.

It should be understood that the processing module 920 in the communications apparatus may be implemented by a processor or a processor-related circuit component, and the transceiver module 910 may be implemented by a transceiver or a transceiver-related circuit component. Operations and/or functions of the modules in the communication apparatus are respectively used to implement corresponding procedures of the method shown in FIG. 3, FIG. 5a, FIG. 5b, FIG. 6, FIG. 7, or FIG. 8. For brevity, details are not described herein again.

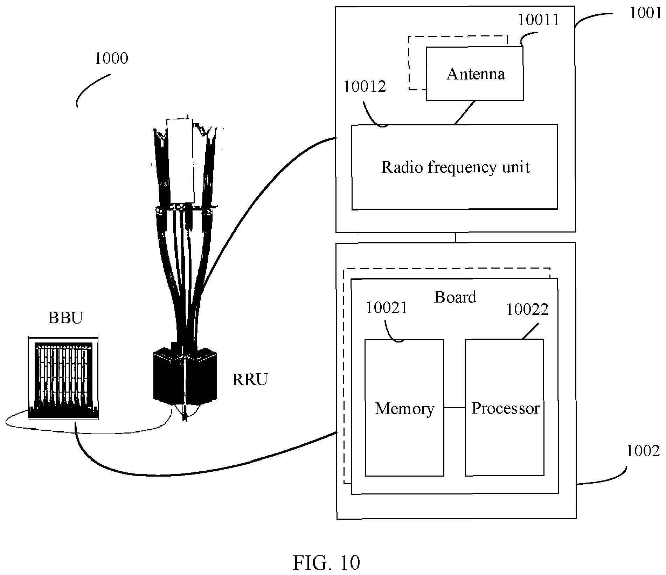

FIG. 10 is a schematic diagram of another structure of a communication apparatus according to an embodiment of this application. The communication apparatus may be specifically a network device, for example, a base station, configured to implement functions of the network device in any one of the foregoing method embodiments. The network device may be the first network element or the second network element in the method embodiments shown in FIG. 3, FIG. 5a, and FIG. 5b, or may be the master network device or the secondary network device in the method embodiments shown in FIG. 6, FIG. 7, and FIG. 8.

The network device 1000 includes one or more radio frequency units, for example, a remote radio unit (remote radio unit, RRU) 1001 and one or more baseband units (baseband unit, BBU) (which may also be referred to as a digital unit (digital unit, DU)) 1002. The RRU 1001 may be referred to as a transceiver unit, a transceiver machine, a transceiver circuit, a transceiver, or the like, and may include at least one antenna 10011 and a radio frequency unit 10012. The RRU 1001 is mainly configured to: receive and send a radio frequency signal and convert the radio frequency signal and a baseband signal. The BBU 1002 is mainly configured to: perform baseband processing, control the base station, and so on. The RRU 1001 and the BBU 1002 may be physically disposed together; or may be physically separately disposed, that is, in a distributed base station.

The BBU 1002, also referred to as a processing unit, is a control center of the base station, and is mainly configured to implement baseband processing functions such as channel coding, multiplexing, modulation, and spectrum spreading. For example, the BBU (the processing unit) 1002 may be configured to control the base station to perform an operation procedure related to the network device in the foregoing method embodiments.

In an example, the BBU 1002 may include one or more boards, and a plurality of boards may jointly support a radio access network (for example, an LTE network) having a single access standard, or may separately support radio access networks (for example, an LTE network, a 5G network, or another network) having different access standards. The BBU 1002 may further include a memory 10021 and a processor 10022, and the memory 10021 is configured to store necessary instructions and data. The processor 10022 is configured to control the base station to perform a necessary action, for example, is configured to control the base station to perform a sending operation in the foregoing method embodiments. For example, when the base station is the first network element in the method embodiment shown in FIG. 3, the processor may be configured to control the base station to perform sending operations such as sending N groups of QoS profiles corresponding to a first QoS flow to a second network element and sending second indication information to a third network element. The memory 10021 and the processor 10022 may serve one or more boards. In other words, a memory and a processor may be disposed on each board. Alternatively, a plurality of boards may share a same memory and a same processor. In addition, a necessary circuit may further be disposed on each board.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable controller (programmable logic device, PLD) or another integrated chip.

It should be understood that steps in the foregoing method embodiments may be implemented by using a logic circuit or instructions in a software form in the processor. The steps of the method disclosed with reference to embodiments of this application may be directly performed and completed by a hardware processor, or may be performed and completed by using a combination of hardware and software modules in the processor.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a first network element and a second network element. Optionally, the communication system may further include at least one terminal device. Optionally, the communication system may further include a third network element.

The first network element is a master network device accessed by a terminal device. Correspondingly, the second network element is a secondary network device accessed by the terminal device, and the third network element may be a core network device. Alternatively, the first network element may be a central unit CU of a secondary network device accessed by a terminal device. Correspondingly, the second network element may be a distributed unit DU of the secondary network device accessed by the terminal device, and the third network element may be a master network device accessed by the terminal device. Alternatively, the first network element may be a CU of a network device accessed by a terminal device. Correspondingly, the second network element may be a DU of the network device accessed by the terminal device, and the third network element may be a core network device. The first network element, the second network element, and the third network element may cooperate with each other to perform the method embodiments shown in FIG. 3, FIG. 5a, and FIG. 5b. For details, refer to the foregoing descriptions of the method embodiments. Details are not described herein again.

An embodiment of this application further provides a communication system. The communication system includes a master network device and a secondary network device. Optionally, the communication system may further include at least one terminal device. Optionally, the communication system may further include a core network device. The master network device and the secondary network device may cooperate with each other to perform the method embodiments shown in FIG. 6, FIG. 7, and FIG. 8. For details, refer to the foregoing descriptions of the method embodiments. Details are not described herein again.

It should be understood that the processor mentioned in embodiments of this application may be a CPU, or may be another general-purpose processor, a DSP, an ASIC, an FPGA, another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that various numbers in various embodiments of this application are merely used for differentiation for ease of description. Sequence numbers of the foregoing processes do not mean execution sequences. The execution sequences of the processes should be determined based on functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a portable hard disk, a read-only memory, a random access memory, a magnetic disk, or an optical disc.

In embodiments of this application, unless there is a particular description or a logical conflict, terms and/or descriptions in different embodiments are consistent and may be mutually referenced. Technical features in the different embodiments may be combined based on their internal logical relationship, to form a new embodiment.

## Claims

1. A communication method, wherein the method comprises:
sending, by a first network element to a second network element, N groups of QoS profiles corresponding to a first QoS flow, wherein N is an integer greater than or equal to 1;
receiving, by the first network element, first indication information from the second network element, wherein the first indication information indicates a group of QoS profiles selected by the second network element for the first QoS flow, and the group of QoS profiles selected for the first QoS flow is one of the N groups of QoS profiles; and
sending, by the first network element, second indication information to a third network element, wherein the second indication information indicates the group of QoS profiles selected for the first QoS flow.

2. The method according to claim 1, wherein the first network element is a master network device accessed by a terminal device, the second network element is a secondary network device accessed by the terminal device, and the third network element is a core network device;
the first network element is a central unit CU of a secondary network device accessed by a terminal device, the second network element is a distributed unit DU of the secondary network device accessed by the terminal device, and the third network element is a master network device accessed by the terminal device; or
the first network element is a CU of a network device accessed by a terminal device, the second network element is a DU of the network device accessed by the terminal device, and the third network element is a core network device.

3. The method according to claim 1 or 2, wherein the method further comprises:
receiving, by the first network element from the third network element, M groups of QoS profiles corresponding to the first QoS flow, wherein M is an integer greater than or equal to N; and
determining, by the first network element, the N groups of QoS profiles based on the M groups of QoS profiles.

4. The method according to claim 3, wherein the method further comprises:
receiving, by the first network element, assistance information from the second network element, wherein the assistance information indicates quality of service QoS that can be satisfied by the second network element; and
the determining, by the first network element, the N groups of QoS profiles based on the M groups of QoS profiles comprises:
determining, by the first network element, the N groups of QoS profiles from the M groups of QoS profiles based on the assistance information.

5. The method according to claim 3 or 4, wherein the method further comprises:
modifying, by the first network element, a value of one or more QoS parameters in one or more of the N groups of QoS profiles.

6. The method according to any one of claims 1 to 5, wherein each group of QoS profiles comprises a value of one or more of the following QoS parameters:
an uplink maximum flow bit rate MFBR, a downlink MFBR, an uplink guaranteed flow bit rate GFBR, a downlink GFBR, an uplink maximum packet loss rate MPLR, a downlink MPLR, a packet delay budget PDB, a packet error rate PER, a 5th generation QoS identifier SQI, a maximum data burst volume MDBV, and a QoS flow priority.

7. A communication method, wherein the method comprises:
receiving, by a second network element from a first network element, N groups of QoS profiles corresponding to a first QoS flow, wherein N is an integer greater than or equal to 1;
selecting, by the second network element, one group of QoS profiles for the first QoS flow from the N groups of QoS profiles; and
sending, by the second network element, first indication information to the first network element, wherein the first indication information indicates the group of QoS profiles selected by the second network element for the first QoS flow.

8. The method according to claim 7, wherein the first network element is a master network device accessed by a terminal device, the second network element is a secondary network device accessed by the terminal device, and the third network element is a core network device;
the first network element is a central unit CU of a secondary network device accessed by a terminal device, the second network element is a distributed unit DU of the secondary network device accessed by the terminal device, and the third network element is a master network device accessed by the terminal device; or
the first network element is a CU of a network device accessed by a terminal device, the second network element is a DU of the network device accessed by the terminal device, and the third network element is a core network device.

9. The method according to claim 7 or 8, wherein the method further comprises:
sending, by the second network element, assistance information to the first network element, wherein the assistance information indicates quality of service QoS that can be satisfied by the second network element.

10. The method according to any one of claims 7 to 9, wherein each group of QoS profiles comprises a value of one or more of the following QoS parameters:
an uplink maximum flow bit rate MFBR, a downlink MFBR, an uplink guaranteed flow bit rate GFBR, a downlink GFBR, an uplink maximum packet loss rate MPLR, a downlink MPLR, a packet delay budget PDB, a packet error rate PER, a 5th generation QoS identifier SQI, a maximum data burst volume MDBV, and a QoS flow priority.

11. A communication apparatus, wherein the apparatus comprises:
a transceiver module, configured to send, to a second network element, N groups of QoS profiles corresponding to a first QoS flow, wherein N is an integer greater than or equal to 1, wherein
the transceiver module is further configured to receive first indication information from the second network element, wherein the first indication information indicates a group of QoS profiles selected by the second network element for the first QoS flow, and the group of QoS profiles selected for the first QoS flow is one of the N groups of QoS profiles; and
a processing module, configured to send second indication information to a third network element via the transceiver module, wherein the second indication information indicates the group of QoS profiles selected for the first QoS flow.

12. The apparatus according to claim 11, wherein the apparatus is a master network device accessed by a terminal device, the second network element is a secondary network device accessed by the terminal device, and the third network element is a core network device;
the apparatus is a central unit CU of a secondary network device accessed by a terminal device, the second network element is a distributed unit DU of the secondary network device accessed by the terminal device, and the third network element is a master network device accessed by the terminal device; or
the first apparatus is a CU of a network device accessed by a terminal device, the second network element is a DU of the network device accessed by the terminal device, and the third network element is a core network device.

13. The apparatus according to claim 11 or 12, wherein the transceiver module is further configured to receive, from the third network element, M groups of QoS profiles corresponding to the first QoS flow, wherein M is an integer greater than or equal to N; and
the processing module is further configured to determine the N groups of QoS profiles based on the M groups of QoS profiles.

14. The apparatus according to claim 13, wherein the transceiver module is further configured to receive assistance information from the second network element, wherein the assistance information indicates quality of service QoS that can be satisfied by the second network element; and
the processing module is specifically configured to determine the N groups of QoS profiles from the M groups of QoS profiles based on the assistance information.

15. The apparatus according to claim 13 or 14, wherein the processing module is further configured to modify a value of one or more QoS parameters in one or more of the N groups of QoS profiles.

16. The apparatus according to any one of claims 11 to 15, wherein each group of QoS profiles comprises a value of one or more of the following QoS parameters:
an uplink maximum flow bit rate MFBR, a downlink MFBR, an uplink guaranteed flow bit rate GFBR, a downlink GFBR, an uplink maximum packet loss rate MPLR, a downlink MPLR, a packet delay budget PDB, a packet error rate PER, a 5th generation QoS identifier SQI, a maximum data burst volume MDBV, and a QoS flow priority.

17. A communication apparatus, wherein the apparatus comprises:
a transceiver module, configured to receive, from a first network element, N groups of QoS profiles corresponding to a first QoS flow, wherein N is an integer greater than or equal to 1; and
a processing module, configured to select one group of QoS profiles for the first QoS flow from the N groups of QoS profiles, wherein
the transceiver module is further configured to send first indication information to the first network element, wherein the first indication information indicates the group of QoS profiles selected by the apparatus for the first QoS flow.

18. The apparatus according to claim 17, wherein the first network element is a master network device accessed by a terminal device, the apparatus is a secondary network device accessed by the terminal device, and the third network element is a core network device;
the first network element is a central unit CU of a secondary network device accessed by a terminal device, the apparatus is a distributed unit DU of the secondary network device accessed by the terminal device, and the third network element is a master network device accessed by the terminal device; or
the first network element is a CU of a network device accessed by a terminal device, the apparatus is a DU of the network device accessed by the terminal device, and the third network element is a core network device.

19. The apparatus according to claim 17 or 18, wherein the transceiver module is further configured to send assistance information to the first network element, wherein the assistance information indicates quality of service QoS that can be satisfied by the apparatus.

20. The apparatus according to any one of claims 17 to 19, wherein each group of QoS profiles comprises a value of one or more of the following QoS parameters:
an uplink maximum flow bit rate MFBR, a downlink MFBR, an uplink guaranteed flow bit rate GFBR, a downlink GFBR, an uplink maximum packet loss rate MPLR, a downlink MPLR, a packet delay budget PDB, a packet error rate PER, a 5th generation QoS identifier SQI, a maximum data burst volume MDBV, and a QoS flow priority.

21. A communication method, wherein the method comprises:
sending, by a master network device, first indication information to a secondary network device, wherein the first indication information indicates the secondary network device to enable a high-speed mode of a terminal device; and
receiving, by the master network device from the secondary network device, a high-speed configuration generated by the secondary network device for the terminal device.

22. The method according to claim 21, wherein the first indication information is comprised in a secondary node addition request message, and the high-speed configuration is comprised in a secondary node addition request acknowledgment message; or the first indication information is comprised in a secondary node modification request message, and the high-speed configuration is comprised in a secondary node modification request acknowledgment message

23. The method according to claim 21 or 22, wherein the method further comprises:
sending, by the master network device, an RRC reconfiguration message to the terminal device, wherein the RRC reconfiguration message comprises the high-speed configuration; and
receiving, by the master network device, an RRC reconfiguration complete message from the terminal device, and sending the RRC reconfiguration complete message to the secondary network device, wherein the RRC reconfiguration complete message indicates that the terminal device has completed the high-speed configuration.

24. The method according to any one of claims 21 to 23, wherein the method further comprises:
disabling, by the master network device, the high-speed mode of the terminal device; and
sending, by the master network device, second indication information to the secondary network device, wherein the second indication information indicates the secondary network device to disable the high-speed mode of the terminal device.

25. The method according to any one of claims 21 to 24, wherein the method further comprises:
receiving, by the master network device, third indication information from the secondary network device, wherein the third indication information indicates the master network device to disable the high-speed mode of the terminal device; and
disabling, by the master network device, the high-speed mode of the terminal device based on the third indication information.

26. The method according to any one of claims 21 to 25, wherein the method further comprises:
receiving, by the master network device, fourth indication information from the terminal device or a core network device, wherein the fourth indication information indicates that the terminal device supports a high-speed mode in a dual-connectivity scenario.

27. A communication method, wherein the method comprises:
receiving, by a secondary network device, first indication information from a master network device, wherein the first indication information indicates the secondary network device to enable a high-speed mode of a terminal device;
generating, by the secondary network device, a high-speed configuration for the terminal device based on the first indication information; and
sending, by the secondary network device, the high-speed configuration to the master network device.

28. The method according to claim 27, wherein the first indication information is comprised in a secondary node addition request message, and the high-speed configuration is comprised in a secondary node addition request acknowledgment message; or the first indication information is comprised in a secondary node modification request message, and the high-speed configuration is comprised in a secondary node modification request acknowledgment message

29. The method according to claim 27 or 28, wherein the method further comprises:
receiving, by the secondary network device, an RRC reconfiguration complete message from the master network device, wherein the RRC reconfiguration complete message indicates that the terminal device has completed the high-speed configuration.

30. The method according to any one of claims 27 to 29, wherein the method further comprises:
receiving, by the secondary network device, second indication information from the master network device, wherein the second indication information indicates the secondary network device to disable the high-speed mode of the terminal device; and
disabling, by the secondary network device, the high-speed mode of the terminal device based on the second indication information.

31. The method according to any one of claims 27 to 30, wherein the method further comprises:
disabling, by the secondary network device, the high-speed mode of the terminal device; and
sending, by the secondary network device, third indication information to the master network device, wherein the third indication information indicates the master network device to disable the high-speed mode of the terminal device.

32. The method according to any one of claims 27 to 31, wherein the secondary network device comprises a central unit CU and a distributed unit DU;
the receiving, by a secondary network device, first indication information from a master network device comprises:
receiving, by the CU of the secondary network device, the first indication information from the master network device;
the generating, by the secondary network device, a high-speed configuration for the terminal device based on the first indication information comprises:
sending, by the CU of the secondary network device, the first indication information to the DU of the secondary network device, so that the DU of the secondary network device generates the high-speed configuration based on the first indication information; and
the sending, by the secondary network device, the high-speed configuration to the master network device comprises:
sending, by the DU of the secondary network device, the high-speed configuration to the CU of the secondary network device; and sending, by the CU of the secondary network device, the high-speed configuration to the master network device.

33. A communication apparatus, wherein the apparatus comprises at least one processor, and the at least one processor is coupled to at least one memory; and
the at least one processor is configured to execute a computer program or instructions stored in the at least one memory, to enable the apparatus to perform the method according to any one of claims 1 to 6.

34. A communication apparatus, comprising a processor and an interface circuit, wherein
the interface circuit is configured to exchange code instructions with the processor; and
the processor is configured to run the code instructions to perform the method according to any one of claims 1 to 6.

35. A communication apparatus, wherein the apparatus comprises at least one processor, and the at least one processor is coupled to at least one memory; and
the at least one processor is configured to execute a computer program or instructions stored in the at least one memory, so that the apparatus performs the method according to any one of claims 7 to 10.

36. A communication apparatus, comprising a processor and an interface circuit, wherein
the interface circuit is configured to exchange code instructions with the processor; and
the processor is configured to run the code instructions to perform the method according to any one of claims 7 to 10.

37. A communication apparatus, comprising one or more modules configured to perform the method according to any one of claims 21 to 26.

38. A communication apparatus, wherein the apparatus comprises at least one processor, and the at least one processor is coupled to at least one memory; and
the at least one processor is configured to execute a computer program or instructions stored in the at least one memory, so that the apparatus performs the method according to any one of claims 21 to 26.

39. A communication apparatus, comprising a processor and an interface circuit, wherein
the interface circuit is configured to exchange code instructions with the processor; and
the processor is configured to run the code instructions to perform the method according to any one of claims 21 to 26.

40. A communication apparatus, comprising one or more modules configured to perform the method according to any one of claims 27 to 32.

41. A communication apparatus, wherein the apparatus comprises at least one processor, and the at least one processor is coupled to at least one memory; and
the at least one processor is configured to execute a computer program or instructions stored in the at least one memory, so that the apparatus performs the method according to any one of claims 27 to 32.

42. A communication apparatus, comprising a processor and an interface circuit, wherein
the interface circuit is configured to exchange code instructions with the processor; and
the processor is configured to run the code instructions to perform the method according to any one of claims 27 to 32.

43. A communication system, wherein the system comprises a first network element and a second network element, wherein
the first network element is configured to perform the method according to any one of claims 1 to 6, and the second network element is configured to perform the method according to any one of claims 7 to 10.

44. A communication system, wherein the system comprises a master network device and a secondary network device, wherein
the master network device is configured to perform the method according to any one of claims 21 to 26, and the secondary network device is configured to perform the method according to any one of claims 27 to 32.

45. A computer-readable storage medium, configured to store instructions, wherein when the instructions are executed, the method according to any one of claims 1 to 6 is implemented, the method according to any one of claims 7 to 10 is implemented, the method according to any one of claims 21 to 26 is implemented, or the method according to any one of claims 27 to 32 is implemented.

46. A computer program product, wherein when a computer reads and executes the computer program product, the computer is enabled to perform the method according to any one of claims 1 to 6, the method according to any one of claims 7 to 10, the method according to any one of claims 21 to 26, or the method according to any one of claims 27 to 32.
